# EUROPEAN PATENT APPLICATION

(11) **EP 2 640 031 A1**
(43) Date of publication of application: **18.09.2013**
(21) Application number: 12305296.1
(22) Date of filing: 14.03.2012
(51) Int. Cl.: H04L 29/06

(54) **Process for monitoring the data of a user over a network**

(71) Applicant: Alcatel Lucent, 75007 Paris (FR)
(72) Inventor: Dupont, Marie-Pascale, 91620 Nozay (FR); Betge-Brezetz, Stéphane, 91620 Nozay (FR); Kamga, Guy-Bertrand, 91620 Nozay (FR); Ghorbel, Mahmoud, 91620 Nozay (FR)
(74) Representative: Sayettat, Julien Christian

(57) **Abstract**

Process for monitoring the data of a user (1) over a network (2), said process providing for, as at least one of said data is propagated and used over said network:
- generating traces for said data, said traces comprising information about the propagation of said data;
- storing said traces in at least one local database (10);
- gathering said traces in a global database (11); and
- analysing said gathered traces for building a propagation map describing the itinerary followed by said data and the actions occurred on said data;
said process further providing for performing privacy analysis from said built propagation map so as to determine the overall propagation and usage behaviour of the data of said user.

## Description

The invention relates to a process and to an architecture for monitoring the data of a user over a network.

The invention notably applies to the monitoring of data over cloud-based network infrastructure.

In distributed networks, such as those using a cloud-based infrastructure, users may be not capable of controlling and/or monitoring their published personal data as it traverses the distributed network. Control of personal data and transparency in the path such data takes when traversing the distributed network may be critical in cloud-based networks, since distributed networks allow data to dynamically move over the infrastructure. For example, different countries may have different regulation frameworks. Moreover, the data may be accessible by various services that are executed in various kinds of environments. Thus, due to the privacy risks affecting a user's publishing data as it traverses the network, users may not trust the publication of their personal data over a cloud-based infrastructure.

To overcome these drawbacks, there exist some security audit systems which allow a user to associate privacy policies with his data that are propagated over a distributed network, said systems further checking if said policies are respected and correctly applied.

There also exist some log systems that generate traces for a data when a process is requested for said data, for example by an application. In particular, the Identity Governance Framework (IGF) solution proposed by the Oracle® company (which is adapted to manage sensitive data, such as users' identity related data, in heterogeneous environments), provides a standard contract for data using between service providers and data repositories, said solution further providing means to verify if said contract is correctly respected by applications of said service providers.

However, those solutions do not allow users to easily verify how their data are processed and propagated over the network. In particular, for providing a user with feedbacks on the application of his privacy policies, such solutions generally send to said user a notification for each action lead on his data.

In particular, those solutions do not allow selecting the data to be monitored, providing the selected data upon said monitoring and/or determining the way that the information should be reported to the user.

Thus, users may encounter some difficulties visualising how their personal data are propagated and used, and detecting unexpected behaviours of said data.

Moreover, those solutions do not provide for helping users to adjust their privacy policies according to the way they want their data to be used and the current way said data are used.

Some embodiments include a process for monitoring propagation and/or processing of data of a user. The process provides to the user a synthesised view of the propagation of his data in order to aid said user in understanding how his data are used and/or propagated. In particular, the process helps the user to define privacy policies for protecting his data and to adjust these policies according to the synthesised view of the propagation and usage of his data.

In a first embodiment, a process is provided for monitoring the data of a user over a network. The process provides for, as at least one of the data is propagated and used over the network:
- generating traces for said data, said traces comprising information about the propagation and usage of said data;
- storing said traces in at least one local database;
- gathering said traces in a global database; and
- analysing said gathered traces for building a propagation map describing the itinerary followed by said data and the actions occurred on said data;
said process further providing for performing privacy analysis from said built propagation map so as to determine the overall propagation and usage behaviour of the data of said user.

In a second embodiment, an architecture is provided for monitoring the data of a user over a network, said architecture comprising:
- at least one local plug-in comprising a module for generating traces for at least one data which is propagated and used over said network, said traces comprising information about the propagation and usage of said data, said local plug-in further comprising at least one local database for storing said generated traces;
- a global server comprising:
   ■ a global database for gathering said traces;
   ■ a module for analysing said gathered traces, said module comprising means for building upon said analysis a propagation map describing the itinerary followed by said data and the actions occurred on said data;
   ■ a module for performing privacy analysis from said built propagation map so as to determine the overall propagation and usage behaviour of the data of said user.

Other aspects and advantages of the invention will become apparent in the following description made with reference to the appended figures, wherein:
- figure 1 represents schematically a global view of an architecture for implementing a process according to the invention;
- figure 2 represents schematically some of the modules included in the architecture of figure 1.

In relation to those figures, a process for monitoring the data of a user 1 over a network 2 and an architecture comprising means for implementing such a process are described below. In particular, the architecture can be embedded in the platform of any service provider who wants to allow their users 1 to benefit from such a process. Moreover, the network 2 can be notably a cloud-based network.

The user 1 can be an individual who wants to monitor his personal data or his professional data, or an administrator working for an enterprise and who wants to monitor sensitive data of said enterprise. Besides, data can be notably privacy sensitive data, such as data relating to the user's identity or profile, for which a monitoring could be particularly important.

The process provides for, as at least one of the data of a user 1 is propagated and used over the network 2, generating traces for said data, said traces comprising information about the propagation of said data. To do so, the architecture comprises at least one local plug-in 3 comprising a module 4 for generating such traces. In relation to figures, the architecture comprises several local plug-ins 3 that are each embedded in the respective execution environments 21 of the entities that request and/or do actions on the data of the user 1. According to a variant, the local plug-in 3 can also be embedded into an application that runs into the cloud-based infrastructure of the network 2.

In particular, the traces are generated for a propagated and used data according to a monitoring policy which is previously configured by the user 1 for said data. To do so, the architecture comprises at least a module for allowing the user 1 to configure a monitoring policy for at least one of his data, the module 4 for generating being adapted to generate traces for said data according to its monitoring policy.

The monitoring policy can define if a data must be monitored or not and, if so, how said data must be monitored, notably as regards of the type of information that the traces of said data must contain. For example, the information can concern the requested and/or executed actions to which the propagated and used data is submitted, such as reading or transferring actions. The information can also concern the date and/or the locations of such requested and/or executed actions, as well as the characteristics of the storage system hosting the data, i.e. the provider, the location and/or the security level of said storage system.

The information can also concern the entity that has requested and/or done those actions, such as a client application or a client service, as well as the characteristics, i.e. the type, the location or the security level of the execution environment 21 of said entity, which can be for example a cloud Virtual Machine (VM).

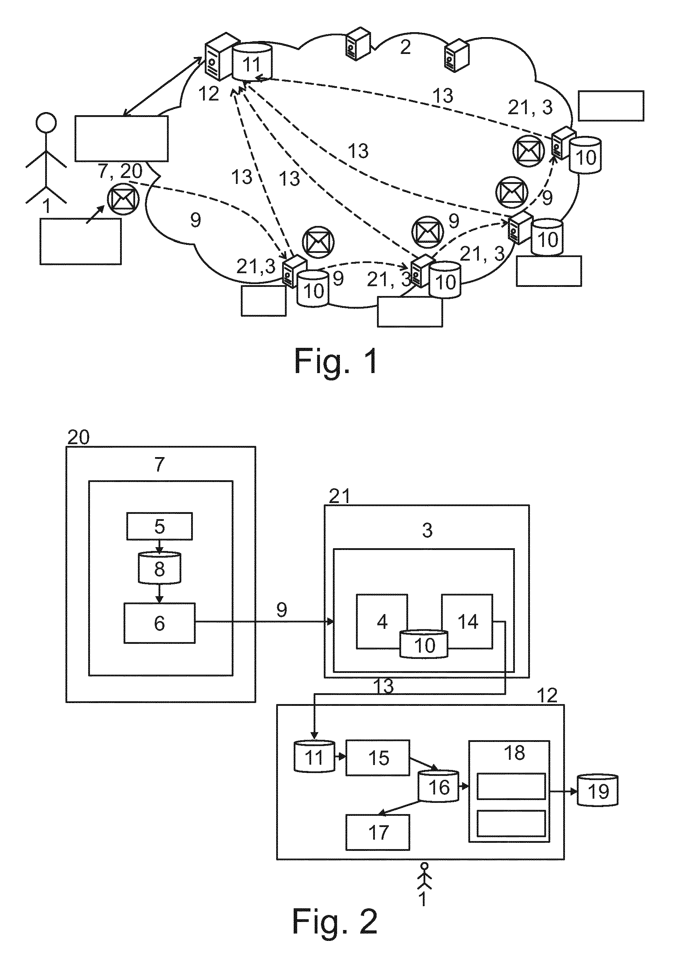

According to an embodiment, the monitoring policy of a data is configured by creation and/or association of a trace template to the data by the user 1. To do so, in relation to figure 2, the architecture comprises a module 5 for allowing the user 1 to create a trace template and a module 6 for allowing the user 1 to associate said template to a data for defining a monitoring policy for said data.

In the represented embodiment, the modules 5, 6 for allowing the user 1 to respectively create a trace template and to associate said template to a data are both embedded into a template plug-in 7 which is added to an application 20, such as a mailer application or a browser application. This application 20 can be for example embedded into the terminal of the user 1 or provided to said user by a service provider.

Moreover, the template plug-in 7 comprises a database 8 for storing the trace templates created by the user 1 through the module 5 of creation and the module 6 of association comprises means to interact with said database to associate a trace template to a data.

The database 8 can notably comprise trace templates that were already predefined, for example by an administrator of a service provider, so that the user 1 who wants to define a monitoring policy for a data has just to associate a trace template to said data through the module 6 of association.

Moreover, the trace templates can comprise information about the local plug-in 3 that should generate traces for a data to which said trace templates are associated.

Thus, the template plug-in 7 is adapted to stick monitoring policies to each data, and the application 20 comprising said template plug-in sends over the network 2 a set 9 comprising said data with its stuck monitoring policy, so that entities requesting actions on said data can access to said data thanks to plug-ins 3 embedded in their respective execution environments 21.

The process provides for storing the traces in at least one local database. To do so, the local plug-in 3 comprises a local database 10 for storing the generated traces.

The process further provides for gathering the traces in a global database 11. According to the figures, the architecture comprises a global server 12 comprising a global database 11 for such a gathering.

In particular, the process provides for sending periodically to the global database 11 a burst 13 comprising the traces stored in a local database 10. To do so, the local plug-in 3 comprises a module 14 for sending periodically to the global database 11 a burst 13 comprising the traces stored in its local database 10.

Once all the traces generated for the data of the user has been gathered, the process provides for analysing said gathered traces for building a propagation map describing the itinerary followed by said data and actions occurred on said data. To do so, the global server 12 comprises a module 15 for analysing the gathered traces, said module comprising means for building such a propagation map for the data of the user upon said analysis and means to store said built propagation map in a dedicated database 16 of the global server 12.

The propagation map is an overall propagation map which describes the propagation and usage of data of the user 1, especially his private sensitive data, over the cloud or distributed network 2, as well as the different actions performed on said data. In particular, a set 9 comprising data and their stuck monitoring policies can be duplicated and the propagation map can also describe the itinerary of said duplicates and the actions occurred on said duplicates. Moreover, a set 9 or a duplicate of said set can be removed and the propagation map can describe such a removal.

Moreover, the process provides for performing privacy analysis from the built propagation map so as to determine the overall propagation and usage behaviour of the data of the user 1. To do so, the global server 12 comprises a module 17 for performing such a privacy analysis from the propagation map stored in the database 16.

For each propagated and used data, the propagation and usage behaviour of said data can notably comprise values among a percentage of requested actions that have been accepted, a percentage of requested actions that have been refused, the most requested actions and the main location where said data has been used. It can also comprise some details about the requesting entities. Thus the propagation and usage behaviour can help the user 1 to figure out the most used data, the most executed actions on a specific data and/or the main location where his data resides or has crossed.

In order to help the user 1 to understand how his data are propagated over the network 2, the process can also provide for presenting to him the overall propagation and usage behaviour resulting from the analysis of the propagation map of said data. To do so, the module 17 for performing privacy analysis can further comprise means for presenting to the user 1 the overall propagation and usage behaviour of his data, for example by displaying said behaviour in the form of a dashboard on the terminal of said user.

The process further provides for checking, for each of the propagated and used data, if the propagation and usage behaviour of said data matches the behaviour expected from the privacy policy that have been previously defined by the user 1 for said data.

To do so, the global server 12 comprises a module 18 for such a checking, said module comprising means to interact with a database 19 comprising privacy policies that have been previously defined by the user 1, in order to verify notably that the enforcement of the privacy policies associated with sensitive data results in propagation and usage behaviours of said data corresponding to the wishes of the user 1.

The privacy policy that has been defined for a data can be stuck to said data and sent with said data in a set 9. Thus, the set 9 can be presented in the form of a Privacy Data Envelop (PDE) comprising data, the monitoring policy of said data and the privacy policy of said data.

In particular, if the propagation and usage behaviour of at least one propagated and used data does not match the behaviour expected from the privacy policy that have been defined for said data, the process recommends to the user 1 some updates to be made for adapting the privacy policy of said data. For example, if the privacy policy associated to a propagated and used data has been wrongly defined, for example by being too or less restrictive, and thus does not support data protection as wished by the user 1, the process helps the user 1 to figure out this situation and can recommend some updates for helping the user 1 to correct said wrongly defined policy.

To do so, the module 18 for checking can comprise means for recommending to the user 1 updates to be made for adapting the privacy policies of the propagated and used data whose propagation and usage behaviour does not match the privacy data behaviour that is expected for said data.

Moreover, the recommendations can help the user 1 to update the privacy policies of his data in order for said policies to be better adapted to the real propagation and usage of said data. For example, if the module 18 for checking reports that a lot of requests for printing a document of a user 1 have been refused, said module can recommend to said user an update for modifying the privacy policy of said document in order to allow some requested entities to print said document. This recommendation can take further inputs from the user's 1 indication, for example whether said user wants more or less propagation.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Process for monitoring the data of a user (1) over a network (2), said process providing for, as at least one of said data is propagated and used over said network:
- generating traces for said data, said traces comprising information about the propagation and usage of said data;
- storing said traces in at least one local database (10);
- gathering said traces in a global database (11); and
- analysing said gathered traces for building a propagation map describing the itinerary followed by said data and actions occurred on said data;
said process further providing for performing privacy analysis from said built propagation map so as to determine the overall propagation and usage behaviour of the data of said user.

2. Process according to claim 1, **characterized in that** the network (2) is a cloud-based network.

3. Process according to claim 1 or 2, **characterized in that** traces are generated for a propagating data according to a monitoring privacy policy which is previously configured by the user (1) for said data.

4. Process according to claim 3, **characterized in that** the monitoring policy is configured by creation and/or association of a trace template to the data by the user (1).

5. Process according to any of claims 1 to 4, **characterized in that** it provides for sending periodically to the global database (11) a burst (13) comprising the traces stored in the local database (10).

6. Process according to any of claims 1 to 5, **characterized in that**, for each propagated and used data, the propagation and usage behaviour of said data comprises values among a percentage of requested actions that have been accepted, a percentage of requested actions that have been refused, the most requested actions and the main location where said data has been used.

7. Process according to any of claims 1 to 6, **characterized in that** it further provides for presenting to the user (1) the overall propagation and usage behaviour.

8. Process according to any of claims 1 to 7, **characterized in that** it further provides for checking, for each of the propagated and used data, if the propagation and usage behaviour of said data match the behaviour expected from the privacy policy that has been previously defined by the user (1) for said data.

9. Process according to claim 8, **characterized in that**, if the propagation and usage behaviour of at least one propagated and used data does not match the behaviour that is expected from the privacy policy defined for said data, said process provides for recommending to the user (1) some updates to be made for adapting said privacy policy.

10. Architecture for monitoring the data of a user (1) over a network (2), said architecture comprising:
- at least one local plug-in (3) comprising a module (4) for generating traces for at least one data which is propagated and used over said network, said traces comprising information about the propagation and usage of said data, said local plug-in further comprising at least one local database (10) for storing said generated traces;
- a global server (12) comprising:
■ a global database (11) for gathering said traces;
■ a module (15) for analysing said gathered traces, said module comprising means for building upon said analysis a propagation map describing the itinerary followed by said data and actions occurred on said data;
■ a module (17) for performing privacy analysis from said built propagation map so as to determine the overall propagation and usage behaviour of the data of said user.

11. Architecture according to claim 9, **characterized in that** the network (2) is a cloud-based network.

12. Architecture according to claim 10 or 11, **characterized in that** it comprises at least a module (5, 6) for allowing the user (1) to configure a monitoring policy for at least one of his data, the module (4) for generating being adapted to generate traces for a propagating data according to its monitoring policy.

13. Architecture according to claim 12, **characterized in that** it comprises a module (5) for allowing the user (1) to create a trace template and a module (6) for allowing the user (1) to associate said template to a data.

14. Architecture according to any of claims 10 to 13, **characterized in that** the local plug-in (3) comprises a module (14) for sending periodically to the global database (11) a burst (13) comprising the traces stored in the local database (10).

15. Architecture according to any of claims 10 to 14, **characterized in that** the module (17) for performing further comprises means for presenting to the user (1) the overall propagation and usage behaviour.

16. Architecture according to any of claims 10 to 15, **characterized in that** the global server (12) further comprises a module (18) for checking, for each of the propagating data, if the propagation and usage behaviour of said data matches the behaviour expected from the privacy policy that have been previously defined by the user (1) for said data.

17. Architecture according to claim 16, **characterized in that** the module (18) for checking comprises means for recommending to the user (1) updates to be made for adapting the privacy policies of propagated and used data whose propagation and usage behaviour does not match the behaviour expected from said privacy policies.
